# EUROPEAN PATENT APPLICATION

(11) **EP 1 693 253 A1**
(43) Date of publication of application: **23.08.2006**
(21) Application number: 05101159.1
(22) Date of filing: 16.02.2005
(51) Int. Cl.: B60R 21/01, H01Q 1/22, H01Q 1/32

(54) **Child seat sensor antenna**

(71) Applicant: IEE INTERNATIONAL ELECTRONICS & ENGINEERING S.A., 6468 Echternach (LU)
(72) Inventor: Decoster, Yves, 6760 ETHE (BE); Noll, Alain, 6672 Gouvy (BE)
(74) Representative: Beissel, Jean

(57) **Abstract**

A child seat sensor antenna structure to be integrated into a vehicle seat comprises at least one at least partially self-supporting antenna wire or cable.

## Description

### Technical field

The present invention generally relates to a child seat sensor for the detection of certain parameters of an auxiliary child seat on a passenger seat of a vehicle. These parameters are used in order to adapt air bag deployment in case of an accident to the circumstances determined by these parameters.

### Background of the Invention

Various sensors have been developed in the automotive technology field to gain reliable information regarding passenger seat occupation. According to the occupation status, air bag deployment conditions may be varied. For this reason, seat occupancy sensors are provided, which enable to detect one or more parameters relating to the seat occupancy. Passenger presence detection (PPD) and child seat presence and orientation detection (CPOD) are some of the most important aspects of the task.

Currently, emission and reception antenna circuits of child seat sensors are designed and manufactured on a carrier material, such as e.g. carrier foils, which support the printed antenna circuits. A child seat sensor printed on a carrier foil and forming an integral component of a seat occupancy sensor is disclosed in German patent application DE 4409971 A1. The child seat sensor component consists of at least one antenna emitting an alternating electromagnetic field. If a child seat is equipped with an identification carrier, the electromagnetic field emitted by the antenna is altered in a characteristic manner and the change of the field can be detected by a base station, which is in communication with air bag controlling electronics.

### Technical problem

It is an object of the present invention to provide a child seat sensor antenna structure that facilitates and renders more flexible manufacturing of passenger seats for vehicles. This is achieved by a child seat sensor antenna structure as claimed in claim 1.

### Summary of the Invention

A child seat sensor antenna structure to be integrated into a vehicle seat comprises at least one at least partially self-supporting antenna wire or cable. The antenna wire or cable provides the antenna structure with a certain degree of rigidity, which thus does not need to be arranged on a carrier layer, such as e.g. a foil. The degree of rigidity of the antenna wire is preferably such that the antenna structure can support its own weight where it is not supported by a bearing.

The child seat antenna structure is independent from other components of a seat occupancy system, such as e.g. a pressure sensor, which eases styling and comfort problems encountered with integrated occupancy sensors. The self-supporting antenna wires facilitate the production process of the seat as it can e.g. be positioned or sunk into the seat cushion during a foaming process.

As will be appreciated, the spatial dimensions of the at least one antenna wire or cable essentially determine the spatial dimensions of the antenna structure. Hence, the antenna structure may have relatively large interstices allowing improved circulation of air when integrated into the seat. Higher seating comfort is thereby achieved.

Advantageously, the at least one antenna wire or cable is sheathed with a casing comprising insulating material.

In order to tailor the rigidity and the bending characteristics of the antenna structure, the antenna wire or cable can have a particular cross-section, especially a circular, elliptical or polygonal cross section. It will be appreciated that the cross-section of the antenna wire or cable may vary in diameter and shape, enabling zones of dedicated haptic properties.

The present invention further relates to a vehicle seat with a seat cushion, wherein a child seat sensor antenna structure with an at least partially self-supporting antenna wire or cable is foamed into the seat cushion.

According to another aspect of the invention, a vehicle seat assembly process comprises the steps of providing a mould for producing a seat cushion by foaming, positioning an antenna structure with an at least partially self-supporting antenna wire or cable into the mould and producing the seat cushion by injecting foam material into the mould.

### Brief Description of the Drawings

Preferred embodiments of the invention will now be described with reference to the accompanying drawings in which:
- Fig. 1:: is a top-view schematic of a vehicle seat with an occupancy sensing system;
- Fig. 2:: is a perspective view of a mould for producing a vehicle seat cushion.

### Description with respect to the figures

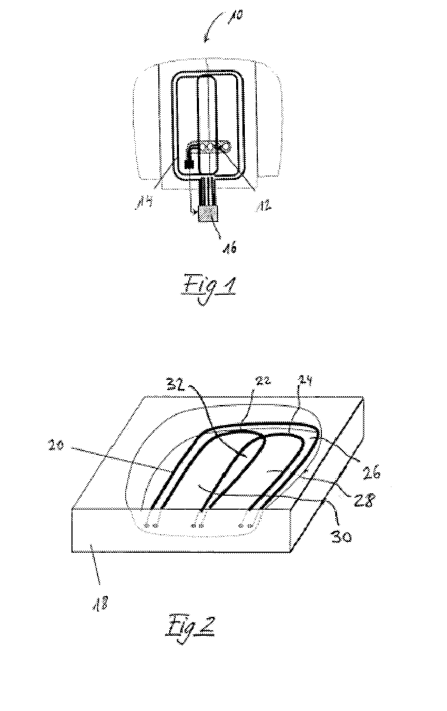

Referring to Fig. 1, a vehicle seat 10 is equipped with an occupancy sensing system. The occupancy sensing system comprises e.g. a foil-type pressure sensor 12 with an array of active areas for sensing pressure due to a seat occupant and a child seat sensor 14 with a large emitting antenna and two smaller receiving antennas. On the basis of the signals received by the pressure sensor 12 and the child seat sensor 14 a control unit 16 calculates a seat occupancy status.

The antennas of the child seat sensor comprise metal wire loops capable of supporting their own weight locally. The antennas are arranged substantially horizontally underneath the seat cover in the cushion of the vehicle seat. The pressure sensor is arranged in a lower part of the cushion. A CPOD antenna structure that is independent of the pressure sensor reduces the development and design efforts, which have to be made in presence of integrated sensors. As the antennas are manufactured independently from the pressure sensor, dedicated antenna technology can be used. The at least partially self-supporting wires or cables of the child seat sensor allow furthermore uncomplicated handling due to their inherent robustness.

Fig. 2 shows a mould 18 for producing a seat cushion. Self-supporting antenna loops 20, 22, 24 have been positioned and fixed in the interior space of the mould 18. The self-supporting antenna loops 20, 22, 24 are placed according to their desired location inside the seat cushion. As the antenna loops 20, 22, 24 are not arranged on a substrate such as e.g. a carrier foil, large gaps 26, 28, 30, 32 exist between the wires. During the foaming process, the foam material can easily pass the gaps 26, 28, 30, 32 and fill the mould 18.

As will be appreciated, this process is compatible with the known seat production techniques. The seat cover can be applied in a separate step onto the seat cushion; alternatively, the foam material can also be injected into a mould formed by the seat cover material. If a pressure sensor is to be supplied, it can be integrated into the seat at an appropriate moment of the assembly process, independently of the antennas of the child seat sensor. The child seat sensor and the pressure sensor can be electronically interconnected outside the seat cushion to form the occupancy sensing system.

## Claims

1. A child seat sensor antenna structure to be integrated into a vehicle seat, **characterised by** an at least partially self-supporting antenna wire or cable.

2. An antenna structure according to claim 1, wherein said at least one antenna wire or cable is sheathed with a casing comprising insulating material.

3. An antenna structure according to claim 1 or 2, wherein said antenna wire or cable has a circular, elliptical or polygonal cross section.

4. A vehicle seat with a seat cushion **characterised by** a child seat sensor antenna structure comprising an at least partially self-supporting antenna wire or cable foamed into said seat cushion.

5. A vehicle seat assembly process comprising the step of providing a mould for producing a seat cushion by foaming, **characterised by** the steps of positioning an antenna structure with an at least partially self-supporting antenna wire or cable into said mould and producing said seat cushion by injecting foam material into said mould.
